Europäisches Patentamt

(19) European Patent Office

Office européen des brevets

(11) Publication number: **0 110 681**
**B1**

(12) **EUROPEAN PATENT SPECIFICATION**

(45) Date of publication of patent specification: **24.08.88**

(21) Application number: **83307182.2**

(22) Date of filing: **24.11.83**

(51) Int. Cl.⁴: **B 29 C 65/02, A 47 K 11/02**

(54) Improvements relating to the manufacture of toilets.

(30) Priority: **25.11.82 CA 416363**

(43) Date of publication of application:
**13.06.84 Bulletin 84/24**

(45) Publication of the grant of the patent:
**24.08.88 Bulletin 88/34**

(84) Designated Contracting States:
**BE DE FR GB IT NL SE**

(56) References cited:
**CA-A-1 156 801**
**FR-A-1 219 586**
**GB-A- 935 337**
**GB-A-2 032 877**
**US-A-2 741 402**
**US-A-4 353 355**

**PLASTICS ENGINEERING, vol. 37, no. 4, April 1981, pages 27-29, Manchester, New Hampshire, GB; A. LEATHERMAN: "Induction bonding finds a niche in an evolving plastics industry"**

(73) Proprietor: **SANITATION EQUIPMENT LIMITED**
**35 Citron Court**
**Concord Ontario L4K 2S7 (CA)**

(72) Inventor: **Stewart, John M.**
**7 River Road, Box 6**
**River Drive Park Ontario, L0G 1S0 (CA)**
Inventor: **Hewson, Clifford Bruce**
**6435 Douglas Street Horschoe Bay**
**West Vancouver British Columbia, V7M 2G2 (CA)**

(74) Representative: **Paget, Hugh Charles Edward et al**
**MEWBURN ELLIS & CO. 2/3 Cursitor Street**
**London EC4A 1BQ (GB)**

## Description

This invention relates to a method of manufacturing a component such as a bowl unit or holding tank for a toilet.

A portable toilet typically comprises a bowl unit which includes a toilet bowl having a discharge opening, and a holding tank which is normally disposed below the bowl unit and is detachably coupled thereto. Valve means are provided for controlling flushing of liquid and waste from the bowl into the holding tank. The bowl unit often incorporates a reservoir for flushing liquid and an example of this type of toilet is disclosed in our U.S. Patent No. 4,091,475. Another example is disclosed in our Canadian Patent Application Serial No. 380,039 filed June 17, 1981.

The bowl unit and holding tank of a portable toilet are normally made of plastic material. In some cases, at least the holding tank is made in one piece by blow moulding. However, in other cases, the holding tank is a composite structure made of upper and lower tank sections secured together around the periphery of the tank. Similar construction techniques have been used for making the bowl unit. Obviously, in either case, the joint between the two sections must be secure and liquid-tight.

There are several known methods of forming such joints in the manufacture of toilets and similar articles, as disclosed for example in FR 1 219 586.

In our Canadian Patent Application identified above, joining of the two tank sections is effected by providing a continuous, downwardly facing channel around the periphery of the upper tank section for receiving the corresponding peripheral margin at the top of the lower tank section. The two sections are then secured together by adhesive. While this method works well with certain types of plastic material, with others, it is difficult to obtain a reliable joint using adhesives.

GB—A—2032877 describes a method of making a plastics drum in which moulded top and bottom closures are welded to a cylindrical tubular side wall by induction welding. The closure has a channel at its periphery which receives the end of the side wall and also receives a sealing strip containing dispersed iron particles. The magnetic field applied by heads located on either side of the channel melts the sealing strip and pressure applied causes the formation of the seal.

An object of the present invention is to provide an improved method of manufacturing a component such as a bowl unit or holding tank for a toilet.

The method of the invention is set out in claim 1.

The method according to claim 1 is different from that of the afore-mentioned GB—A—2032877 not only in that it relates to the manufacture of a toilet component but also in that the joint plane is located in a side wall of the toilet component. To permit proper access of the field inducing heads to the joint region in the side wall, claim 1 specifies that the channel is stepped outwardly from the side wall part.

The method provide by the invention may be employed to manufacture various components for a toilet. For example, in the case of a portable toilet, the method may be used to manufacture one or both of the holding tank and bowl unit.

Preferred optional features of the method of the invention are set out in dependent claims 2—9.

In order that the invention may be more clearly understood, reference will now be made to the accompanying drawings which illustrate a preferred embodiment of the invention by way of example, and in which:

Fig. 1 is a partially exploded perspective view of a two-piece portable toilet manufactured in accordance with the present invention;

Fig. 2 is a partial longitudinal sectional view illustrating a step in the manufacture of the toilet of Fig. 1;

Figs. 3 and 4 are enlarged sectional views showing respectively a part of the joint between the two sections of the holding tank as shown in Fig. 1, before and after the sealing operation is performed; and,

Figs. 5, 6 and 7 are views similar to Fig. 3 showing respective alternative forms of joint.

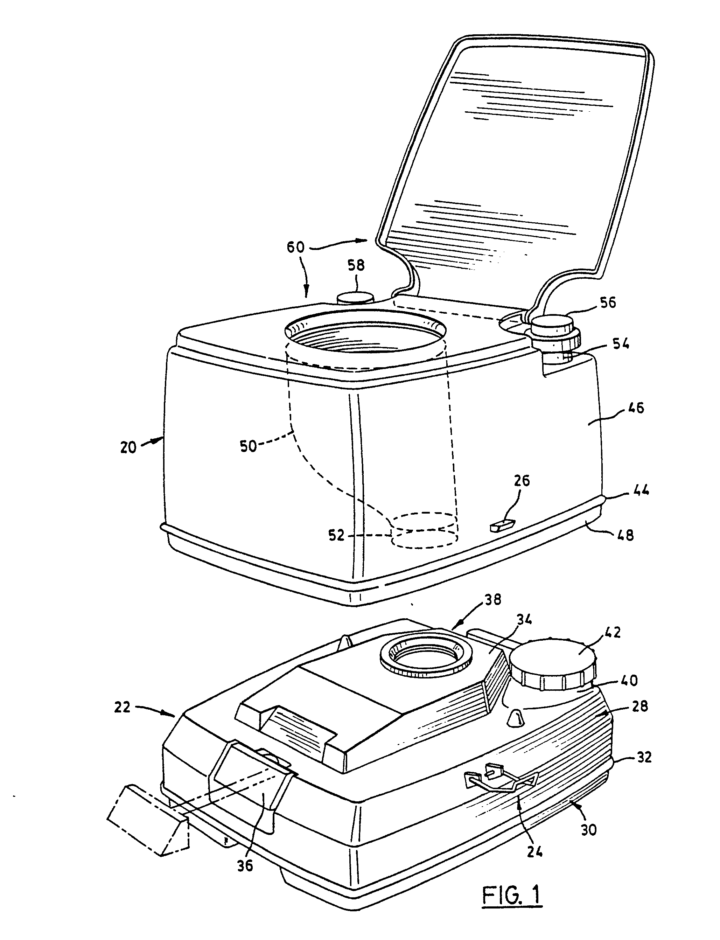

Referring first to Fig 1, a portable two-piece toilet is shown to include a bowl unit generally denoted 20 and a holding tank 22. The bowl unit is shown separate from and raised above the holding tank for clarity of illustration but, in use, the bowl unit will of course fit onto and be supported by the holding tank. Clasp-type fasteners, one of which is visible at 24 are provided at both sides of the holding tank for releasably coupling the bowl unit and holding tank together. A keeper formation on the bowl unit for co-operation with latch 24 is shown at 26.

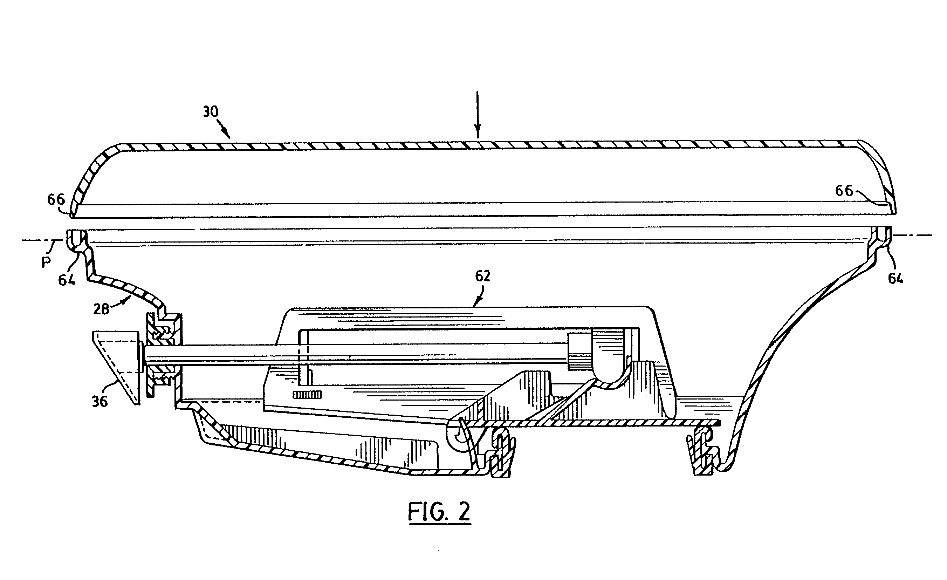

In this embodiment, the bowl unit and holding tank are both manufactured by the same method. Thus, each of these components comprises upper and lower sections which are sealed together around the periphery of the component to form a hollow internal space for receiving liquid. In the case of the holding tank, the upper and lower sections are denoted respectively 28 and 30 and the joint between the two sections is visible at 32. The upper section incorporates an integral housing 34 for a valve mechanism, parts of which are visible in Fig. 2. The valve mechanism is essentially the same as that disclosed in our Canadian Patent application aforesaid and will not therefore be described in detail. For present purposes, it is sufficient to note that the mechanism is actuated by a handle 36 which can be pulled forwardly to the position shown in ghost outline in Fig. 1 to open the valve. The valve controls an inlet generally designated 38 fitted with a seal. The upper holding tank also incorporates a neck 40 through which the holding tank can be drained from time to time and which is normally closed by a cap 42.

In the case of the bowl unit 20, reference numeral 44 indicates a joint between an upper bowl unit section 46 and a lower section 48. The upper section incorporates an integrally formed bowl, most of which is indicated in dotted lines at 50. An outlet from the bowl is indicated at 52. The hollow internal space surrounding the bowl forms a reservoir for flushing liquid and an inlet neck to the reservoir is shown at 54 and is formed as part of the upper bowl unit section 46. A cap is shown at 56. The upper section 46 also incorporates an integral pump cylinder (not shown) which receives a pump mechanism generally denoted 58 by which flushing liquid can be dispensed into the bowl at appropriate times. Again, the pump mechanism forms no part of the present invention and will not therefore be described in detail. A separate seat and lid assembly 60 is hinged to the upper bowl unit section 46 and the lid is shown raised in Fig. 1.

In summary, each of the bowl units 20 and the holding tank 22 is made up of two plastic mouldings, one of which forms an upper section and the other a lower section. Each of these mouldings is separately manufactured by a conventional moulding technique (typically injection moulding) in a polypropylene plastic material. In each case, the two mouldings are then joined together by essentially the same technique which will now be described primarily by reference to the holding tank 22 although it is of course to be understood that similar steps would be followed to assemble the bowl unit 20.

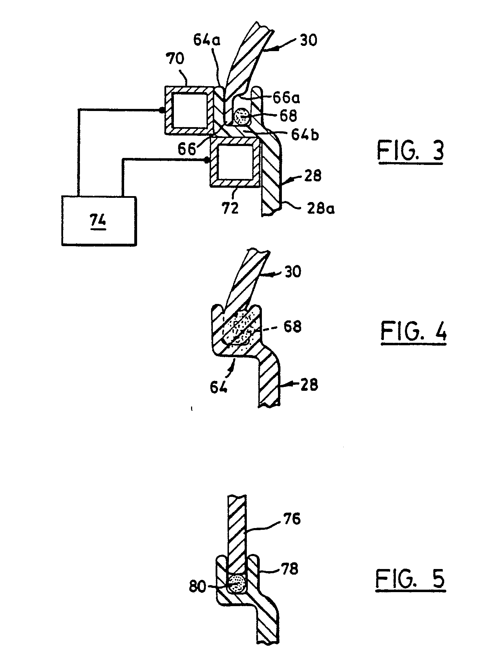

Referring now to Fig. 2, the holding tank 22 is shown in section and inverted as compared with the normal position of use in which it is shown in Fig. 1. In assembling the holding tank from the two plastic mouldings, the moulding which forms the upper tank section 28 is initially placed in this inverted position and supported in a suitable jig (not shown). At this time, the tank section will have been fitted with the valve mechanism, which is generally denoted by reference numeral 62 in Fig. 2, but the bottom holding tank section 30 will not be in place. In Fig. 2, that section is shown exploded above the upper section 28 prior to the lower section being fitted to the upper section. It will be seen that the moulding which forms the upper section includes a continuous channel 64 which is formed around the periphery of the moulding in a joint plane denoted P in Fig. 2. The moulding which forms the lower tank section is in turn formed with a corresponding continuous tongue 66 capable of being received in channel 64 for forming a joint between the two mouldings. Fig. 3 is a detail sectional view showing the channel and tongue fitted together prior to commencement of the sealing operation used to join the mouldings and Fig. 4 shows the channel and tongue after the sealing operation has been completed.

However, before the two sections are brought together, a sealing strip which is generally indicated at 68 is placed within channel 64. The sealing strip is substantially co-extensive with channel 64 and is in the nature of a strand or filament of generally circular shape in cross- section. A length appropriate to the total length of channel 64 is prepared and placed in the channel so that the whole of the base of the channel is covered. Only then is the lower tank section fitted to the upper tank section with tongue 66 engaged in channel 64 as best shown in Fig. 3.

Referring now to that view, the two mouldings (which form the two tank sections) are dimensioned so that tongue 66 is positioned in contact with the outer side wall 64a of channel 64; that is, the side of the channel which would be at the exterior of the completed holding tank. Ideally, the sealing strip 68 should be against the inner wall of the channel although in practice it may not be possible to position the sealing strip sufficiently precisely to ensure that this happens. In any event, if tongue 66 is at the outer side wall, the sealing strip 68 will tend to be confined at the inner side of the channel as shown in Fig. 3. A stop 66a is formed immediately adjacent to tongue 66 so that the moulding at least partly covers the open mouth of channel 64 to further assist in confining the sealing strip within the channel during fusing of the strip with the channel and tongue.

Fig. 3 also illustrates the fact that the portion of the moulding which forms channel 64 is shaped so that the channel is stepped outwardly from the remainder of the side wall of the moulding, indicated at 28a in Fig. 3. In this way, the portion of the moulding which forms the base of the channel (denoted 64b) protrudes outwardly from the wall of the moulding so that transmission heads indicated at 70 and 72 in Fig. 3 can be positioned close to the sealing strip 68 for exciting the particles therein.

In this particular embodiment, the sealing strip 68 is formed from the same material as the two mouldings to be fused together (polypropylene) and has iron particles dispersed therein.

The transmission heads 70 and 72 are in the form of rectangular section copper tubes which are hollow and through which cooling water is passed. The magnetic field is applied to the sealing strip using a conventional radio frequency generator of the type used for induction welding. The generator is indicated generally by reference numeral 74 in Fig. 3 and includes as induction coil (not shown) in which a radio frequency magnetic field is induced. The magnetic field is applied to the sealing strip by wey of the two transmission heads. The heads will be supported by the jig in which the mouldings are located.

After the mouldings have been assembled with the tongue of tank section 30 engaged in the channel of section 28 sealing strip 68 is subjected to the effect of a high-frequency magnetic field by way of the transmission heads. The magnetic field has characteristics selected to excite the particles in the sealing strip to an extent sufficient to cause the strip to fuse with the mouldings in the region of the channel and tongue. While the magnetic field is being applied, slight downward pressure is exerted on tank section 30 so as to ensure that the tongue 66 is fully seated within channel 64 and is applied against the outer wall 64a of the channel. In this way, any excess material which might be exuded from the channel will tend to flow into the internal space within the holding tank rather than outwardly. Obviously, excess material at the exterior of the tank would be aesthetically undesirable.

Fig. 4 shows the fused mass which results from this sealing operation. A fully secure and liquid-tight seal is produced in which the co-operating portions of tongue 66 and channel 64 have merged so as to be virtually indistinguishable. However, the particles which were within sealing strip 68 would generally be discernable in the fused mass.

The magnetic field produced by generator 74 is applied to sealing strip 68 at a frequency and intensity and for a period of time sufficient to effect the required fusion of the mouldings. In one particular example, a frequency of 7,000 c.p.s. was found to be adequate. In any event, after a suitable period of time determined by experimentation generator 74 is switched off. Transmission heads 70 and 72 are, however, allowed to remain in contact with the channel 64 until the fused assembly has cooled to an extent sufficient to permit the holding tank to be handled.

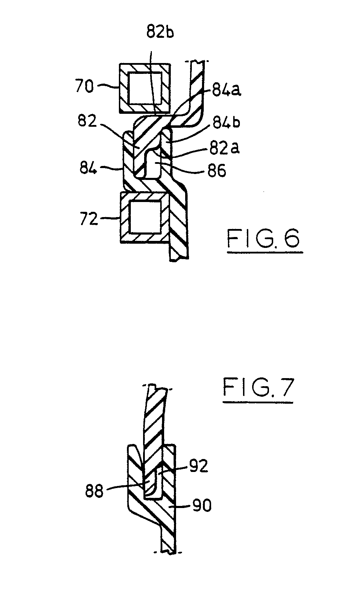

In an alternative embodiment (see Fig. 6), it would be possible to design the moulding which forms the lower tank section 30 so as to permit the transmission heads to be positioned vertically above and below the sealing strip 68 although this would involve some complication in jig design to allow the upper transmission head to be moved when the fused assembly is to be withdrawn from the jig.

Fig. 5 illustrates a simplified form of the tongue and channel joint design shown in Figs. 3 and 4 in which a plain tongue 76 fits substantially closely within a channel 78 with the interposition of a sealing strip 80. A configuration such as this has the disadvantage that flow of the sealing strip is not controlled. However, it is believed that a practical and liquid-tight seal will be obtained with this design.

Figs. 6 and 7 show further alternative forms of joint. As indicated previously, the moulding on which the tongue is formed (as tongue 66 in Fig. 3) may be shaped so that the tongue moulding at least partly covers the open mouth of the channel on the other moulding. In the embodiments shown in Figs. 6 and 7 the tongue moulding is designed to completely cover and close the open mouth of the channel so that the sealing strip is fully enclosed within the channel when the fusing operation is performed. In Fig. 6, the joint is also designed to permit the transmission heads (as heads 70 and 72 — Fig. 3) to be positioned vertically respectively above and below the sealing strip as mentioned above. In this way, the lines of flux between the transmission heads are straight and pass directly through the sealing strip. It is believed that this may offer some advantage in terms of a faster cycle time for the induction welding operation.

In Fig. 6, the transmission heads are denoted 70 and 72 as previously and are positioned resepectively above and below the joint. The tongue and channel which form the joints are denoted respectively as 82 and 84. Tongue 82 is shaped to define a step 82a and has a width at the position of the step substantially equal to the width of the mouth of the channel so that when the tongue is inserted into the channel, its mouth is closed. The tongue then defines an enclosed space 86 within the channel for receiving the sealing strip; for clarity of illustration, the strip itself is not shown.

In the Fig. 6 embodiment, the moulding from which the tongue is formed includes a portion denoted 82b immediately adjacent to the tongue itself, which portion extends substantially at right angles to the tongue acrosss the outer edge 84a of the inner limb 84b of channel 84. The moulding is designed so that, when the tongue 82 is fully seated in channel 84, the lower surface of portion 82b as drawn bears against edge 84a and acts as a further barrier confining the sealing strip within the channel.

Fig. 7 shows a still further form of joint in which the tongue and channel are denoted respectively 88 and 90. As drawn, tongue 88 is shown positioned within the channel but slightly above its fully seated position, for clarity of illustration. The channel and tongue are designed to define an enclosed space 92 for receiving the sealing strip (not shown). In both the embodiments of Figs. 6 and 7, the enclosed space (86 or 92) preferably has a cross-sectional area equal to the cross-sectional area of the sealing strip. It has been found that, by confining the sealing strip within the channel as described, flow of excess molten plastic from the joint can be avoided which, in turn, makes for reasonable certainty of a leak-free joint between the two mouldings.

It will of course be appreciated that the preceding description relates to particular preferred embodiments of the invention only and that many modifications are possible within the broad scope of the invention. For example, the invention has been described specifically in the environment of portable toilets and more particularly for the manufacture of a bowl unit and/or waste holding tank. However, it is to be understood that the method provided by the invention may be applied to other components for a toilet. For example, it would probably be possible to employ the method of the invention for manufacturing a conventional toilet bowl and trap assembly from two plastic mouldings which meet in a horizontal joint plane passing through the trap. It should also be noted that a component to be manufactured by the method of the invention could be made from more than two parts. Each of the mouldings joined by the method of the invention could itself be a composite article.

**Claims**

1. A method of manufacturing a component for a toilet, the method comprising the steps of:

forming first and second mouldings (28, 30; 46, 48) in thermoplastic material, the mouldings constituting portions of said component and being adapted to fit together along a joint line (P) to form an enclosure (20, 22) having a hollow internal space for receiving liquid, the mouldings defining respectively, a continuous channel (64, 78, 84, 90) and a continuous tongue (66, 76, 82, 88) capable of being received in said channel for forming a joint (32) between the mouldings, each moulding including a part of a side wall of the toilet component and the joint (32) being located in the side wall between the upper and lower ends of the side wall, at least said channel (64, 78, 84, 90) being stepped outwardly from the said side wall part of the first moulding so that the channel base wall (64b) provides an exterior surface of the joint which extends outwardly from the side wall part of the first moulding,

providing a sealing strip (68, 80) which is adapted to be received in said channel (64, 78, 84, 90) and is substantially co-extensive with the length of said channel, the strip comprising a thermoplastic material capable of fusing with said thermoplastic material from which the mouldings (28, 30; 46, 48) are formed and having magnetically excitable particles dispersed therein;

positioning said sealing strip (68, 80) in said channel (64, 78, 84, 90);

assembling said mouldings (28, 30; 46, 48) to form said enclosure (20, 22) with the tongue (66, 76, 82, 88) of one moulding (30, 48) engaged in the channel (64, 78, 84, 90) of the other (28, 46); and

subjecting the sealing strip (68, 80) to the effect of a high-frequency magnetic field having characteristics selected to excite said particles of the sealing strip to an extent sufficient to cause said strip to fuse with said channel and tongue and form a liquid-tight seal between said mouldings, by positioning respective field inducing heads (70, 72) adjacent said joint (32) with one field-inducing head (72) located at said outwardly extending exterior surface and generating a high frequency magnetic field between said heads.

2. A method as claimed in claim 1, wherein the said mouldings (28, 30; 46, 48) are shaped so that in the use orientation of the toilet component said tongue (82) extends vertically into the channel (84), and so that said tongue (82) and channel (84) are both at least partly offset outwardly relative to the side wall parts of the respective mouldings in which they are formed so as to form a said outwardly extending exterior surface on each said moulding, which surfaces are on opposite sides of the assembled tongue and channel, and the field-inducing heads (70, 72) for generating said high-frequency magnetic field are positioned at said surfaces respectively on opposite sides of the assembled tongue and channel so that substantially straight lines of magnetic flux between the heads extend through the sealing strip (68).

3. A method as claimed in claim 1 or claim 2 wherein, as seen in section perpendicular to the joint line, the tongue (66, 82, 88) is narrower than the channel mouth and said second component (30) has a region adjacent the root of the tongue which is thicker in the transverse direction than the tongue so as at least partially to close the channel mouth while the magnetic field is applied in order to provide a barrier against escape of the sealing strip material during fusion of the strip with the channel and the tongue.

4. A method as claimed in claim 3, wherein the second moulding entirely closes the mouth of the channel to form an enclosed space (86, 92) in which said sealing strip (68) is located, the cross-sectional area of said enclosed space being substantially equal to the cross-sectional area of the sealing strip.

5. A method as claimed in any one of claims 1 to 4 wherein said mouldings (28, 30; 46, 48) are shaped so that said tongue (66, 76, 82, 88) is positioned in contact with an outer side wall of said channel (64, 78, 84, 90) when said mouldings are assembled to form said enclosure, and wherein the mouldings are subjected to a compressive force tending to urge said tongue (66, 76, 82, 88) towards the base of said channel (64, 78, 84, 90) when the sealing strip (68, 80) is subjected to the effect of said high-frequency magnetic field, whereby the tongue is encourage to seat fully in said channel and any excess plastic material which may tend to exude from the channel will tend to flow into said internal space.

6. A method as claimed in any one of claims 1 to 5, wherein said steps of positioning the sealing strip (68, 80) in the channel (64, 78, 84, 90) and assembling the mouldings (28, 30; 46, 48) are performed by initially positioning the first moulding (28, 46) with its said channel facing upwardly; inserting the sealing strip downwardly into said channel and engaging the tongue (66, 76, 82, 88) of the second moulding (30, 48) in said channel (64, 78, 84, 90), and wherein the sealing strip (68, 80) is subjected to the effect of said high-frequency magnetic field with the mouldings located in said respective positions.

7. A method as claimed in any one of claims 1 to 6 wherein said component is a tank (22) for a portable toilet and wherein said first and second mouldings (28, 30) form respective upper and lower sections of said tank.

8. A method as claimed in any of claims 1 to 6, wherein said component is a bowl unit (20) for a portable toilet and wherein said first and second mouldings (46, 48) comprise respective upper and lower sections of said bowl unit.

9. A method as claimed in claim 8 wherein said first moulding (46) defining the upper section of the bowl unit (20) comprises an integral moulding defining an outer wall of the unit and a bowl.

**Patentansprüche**

1. Verfahren zur Herstellung einer Komponente für eine Toilette, umfassend die Schritte:

des Bildens eines ersten Formteils und eines zweiten Formteils (28, 30; 46 48) aus thermoplastischem Material, wobei die Formteile Teile der Komponente bilden und so ausgebildet sind, daß sie längs einer Verbindungslinie (P) zusammenpassen und einen Behälter (20, 22) mit einem inneren Hohlraum zur Aufnahme von Flüssigkeit bilden, wobei die Formteile eine kontinuierliche Rinne (64, 78, 84, 90) bzw. einen kontinuierlichen zungenförmigen Rand (66, 76, 82, 88) bilden, der von der Rinne aufgenommen werden kann, um eine Fügestelle (32) zwischen den Formteilen zu bilden, wobei jedes Formteil einen Teil der Seitenwand der Toiletten-Komponente aufweist und die Fügestelle (32) in der Seitenwand zwischen dem oberen Ende und dem unteren Ende der Seitenwand angeordnet ist, wobei wenigstens die Rinne (64, 78, 84, 90) von dem Seitenwand-Teil des ersten Formteils stufenförmig nach außen abgesetzt ist, so daß die Grundwandung (64b) der Rinne eine äußere Oberfläche der Fügestelle bildet, die von dem Seitenwand-Teil des ersten Formteils nach außen vorspringt; des Vorsehens einer Dichtungsschnur (68, 80), die von der Rinne (64, 78, 84, 90) aufgenommen werden kann und im wesentlichen mit der Länge der Rinne gemeinsam verläuft, wobei die Schnur ein thermoplastisches Material umfaßt, das zur Verschweißung mit dem thermoplastischen Material, aus dem die Formteile (28, 30; 46, 48) gebildet sind, befähigt ist und darin dispergiert magnetisch erregbare Teilchen enthält; des Anordnens der Dichtungsschnur (68, 80) in der Rinne (64, 78, 84, 90); des Zusammenfügens der Formteile (28, 30; 46, 48) zur Bildung des Behälters (20, 22), wobei der zungenförmige Rand (66, 76, 82, 88) des einen Formteils (30, 48) in die Rinne (64, 78, 84, 90) des anderen (28, 46) eingreift; und des Einwirkenlassens eines Hochfrequenz-Magnetfeldes mit ausgewählten Charakteristiken auf die Dichtungsschnur (68, 80), um die Teilchen der Dichtungsschnur in einem Maße zu erregen, das ausreicht, um zu bewirken, daß die Schnur mit der Rinne und dem zungenförmigen Rand verschmilzt und eine flüssigkeitsdichte Abdichtung zwischen den Formteilen bildet, durch Positionieren entsprechender, das Feld induzierender Köpfe (70, 72) in der Nachbarschaft der Fügestelle (32), wobei der eine das Feld induzierenden Kopf (72) an der nach außen vorspringenden äußeren Oberfläche angeordnet ist und ein Hochfrequenz-Magnetfeld zwischen den Köpfen erzeugt.

2. Verfahren nach Anspruch 1, worin die Formteile (28, 30; 46, 48) so gestaltet sind, daß in der Gebrauchsposition der Toiletten-Komponente der zungenförmige Rand (82) senkrecht in die Rinne (84) hineinreicht und daß sowohl der zungenförmige Rand (82) als auch die Rinne (84) wenigstens teilweise relativ zu den Seitenwand-Teilen der jeweiligen Formteile, in denen sie ausgebildet sind, nach außen versetzt sind, so daß sie die nach außen vorspringende äußere Oberfläche auf jedem der Formteile bilden, wobei diese Oberflächen sich auf entgegengesetzten Seiten des mit der Rinne zusammengefügten zungenförmigen Randes befinden und die das Feld induzierenden Köpfe (70, 72) zur Erzeugung des Hochfrequenz-Magnetfeldes jeweils an den Oberflächen auf entgegengesetzten Seiten des mit der Rinne zusammengefügten zungenförmigen Randes angeordnet sind, so daß im wesentlichen gerade Linien des magnetischen Flusses zwischen den Köpfen durch die Dichtungsschnur hindurch verlaufen.

3. Verfahren nach Anspruch 1 oder Anspruch 2, worin, betrachtet im Schnitt senkrecht zu der Fügelinie, der zungenförmige Rand (66, 82, 88) schmaler als die Öffnung der Rinne ist und das zweite Formteil (30) einen Bereich, angrenzend an die Wurzel des zungenförmigen Randes, aufweist, der in Querrichtung dicker als der zungenförmige Rand ist, so daß er wenigstens zum Teil die Öffnung der Rinne verschließt, während das Magnetfeld zur Einwirkung gebracht wird, um eine Sperre gegen ein Entweichen des Dichtungsschnur-Materials während der Verschweißung der Dichtungsschnur mit der Rinne und dem zungenförmigen Rand zu errichten.

4. Verfahren nach Anspruch 3, worin das zweite Formteil die Öffnung der Rinne vollständig verschließt, wodurch ein umschlossener Raum (86, 92) gebildet wird, in dem sich die Dichtungsschnur (68) befindet, wobei der Querschnitt dieses umschlossenen Raums im wesentlichen gleich dem Querschnitt der Dichtungsschnur ist.

5. Verfahren nach irgendeinem der Ansprüche 1 bis 4, worin die Formteile (28, 30; 46, 48) so gestaltet sind, daß der zungenförmige Rand (66, 76, 82, 88) in Berührung mit einer äußeren Seitenwand des Kanals (64, 78, 84, 90) gebracht wird, wenn die Formteile zur Bildung des Behälters zusammengefügt werden, und worin die Formteile der Einwirkung einer Kompressionskraft ausgesetzt werden, die den zungenförmigen Rand (66, 76, 82, 88) gegen die Basis der Rinne (64, 78, 84, 90) drückt, wen die Dichtungsschnur (68, 80) der Einwirkung des Hochfrequenz-Magnetfeldes ausgesetzt wird, wodurch der zungenförmige Rand veranlaßt wird, voll in der Rinne aufzusitzen, und etwa überschüssiger Kunststoff, der zum Austreten aus der Rinne neigen könnte, dazu neigt, in den Innenraum hineinzufließen.

6. Verfahren nach irgendeinem der Ansprüche 1 bis 5, worin die Schritte des Anbringens der Dichtungsschnur (68, 80) in der Rinne (64, 78, 84, 90) und das Zusammenfügen der Formteile (28, 30; 46, 48) in der Weise durchgeführt werden, daß zu Beginn das erste Formteil (28, 46) mit seiner Rinne aufwärts gewandt angeordnet wird, die Dichtungsschnur nach unten in diese Rinne eingesetzt wird und der zungenförmige Rand (66, 76, 82, 88) des zweiten Formteils (30, 48) in die Rinne (64, 78, 84, 90) eingeschoben wird, und worin die Dichtungsschnur (68, 80) der Einwirkung des Hochfrequenz-Magnetfeldes ausgesetzt wird, wenn die Formteile sich in den betreffenden Positionen befinden.

7. Verfahren nach irgendeinem der Ansprüche 1 bis 6, worin die Komponente ein Tank (22) für eine tragbare Toilette ist und worin das erste Formteil und das zweite Formteil (28, 30) den oberen bzw. unteren Abschnitt des Tanks bilden.

8. Verfahren nach irgendeinem der Ansprüche 1 bis 6, worin die Komponente eine Becken-Einheit (20) für eine tragbare Toilette ist und worin das erste Formteil und das zweite Formteil (46, 48) den oberen bzw. unteren Abschnitt der Becken-Einheit bilden.

9. Verfahren nach Anspruch 8, worin das den oberen Abschnitt der Becken-Einheit (20) definierende erste Formteil (46) ein integriertes Formteil umfaßt, das die Außenwand der Einheit und das Becken bildet.

**Revendications**

1. Procédé de fabrication d'un élément de W.C., comprenant les opérations qui consistent à former une première et une seconde pièces moulées (28, 30; 46, 48) en une matière thermoplastique, ces pièces moulées constituant des parties dudit élément et étant agencées de manière à se raccorder dans un plan d'assemblage (P) pour former une enceinte (20, 22) présentant un espace intérieur creux propre à recevoir un liquide, les pièces moulées comportant respectivement une gouttière continue (64, 78, 84, 90) et une languette continue (66, 76, 82, 88) susceptible d'être reçue dans cette gouttière pour former un joint (32) entre les pièces moulées, chaque pièce moulée comprenant une partie d'une paroi latérale de l'élément de W.C. et le joint (32) étant situé dans la paroi latérale entre les extrémités supérieure et inférieure de la paroi latérale, ladite gouttière (64, 78, 84, 90) au moins étant décalée en gradin vers l'extérieur par rapport à ladite partie de paroi latérale de la première pièce moulée de telle manière que le fond (64b) de la gouttière constitue une surface extérieure du joint qui s'étend vers l'extérieur à partir de la partie de paroi latérale de la première pièce moulée, à prévoir une bande d'étanchéité (68, 80) qui est susceptible d'être reçue dans la gouttière (64, 78, 84, 90) et qui a sensiblement la même longueur que cette gouttière, la bande étant faite d'une matière thermoplastique capable de s'unir par fusion à la matière thermoplastique dont les pièces moulées (28, 30; 46, 48) sont faites et contenant, en dispersion dans cette matière thermoplastique, des particules excitables magnétiquement, à placer la bande d'étanchéité (68, 80) dans la gouttière (64, 78, 84, 90), à assembler les pièces moulées (28, 30; 46, 48) de manière à former ladite enceinte (20, 22), la languette (66, 76, 82, 88) de l'une des pièces moulées (30, 48) s'engageant dans la gouttière (64, 78, 84, 90) de l'autre (28, 46), et à soumettre la bande d'étanchéité (68, 80) à l'effet d'un champ magnétique à haute fréquence ayant des caractéristiques choisies pour exciter lesdites particules de la bande d'étanchéité dans une mesure suffisante pour produire l'union par fusion de cette bande avec la gouttière et la languette et former un joint étanche aux liquides entre les pièces moulées, en plaçant des têtes inductrices de champ respectives (70, 72) à proximité immédiate du joint (32), l'une des têtes inductrices de champ (72) étandinductrices de champ (72) étant placée au niveau de ladite surface extérieure s'étendant vers l'extérieur, et en créant un champ magnétique à haute fréquence entre les têtes.

2. Procédé selon la revendication 1, dans lequel les pièces moulées (28, 30; 46, 48) ont une forme telle que dans l'orientation de l'élément de W.C. en service, la languette (82) s'étende verticalement dans la gouttière (84) et que la languette (82) et la gouttière (84) soient l'une et l'autre décalées au moins partiellement vers l'extérieur par rapport aux parties de paroi latérale des pièces moulées dans lesquelles elles sont respectivement formées, de manière à former une desdites surfaces extérieures s'étendant vers l'extérieur sur chacune de ces pièces moulées, surfaces qui sont sur des côtés opposés de la languette et de la gouttière assemblées, les têtes inductrices de champ (70, 72) destinées à créer le champ magnétique à haute fréquence étant placées au niveau de ces surfaces, respectivement sur les côtés opposés de la languette et de la gouttière assemblées, de telle sorte que des lignes de flux magnétique sensiblement rectilignes entre les têtes passent par la bande d'étanchéité (68).

3. Procédé selon la revendication 1 ou 2, dans lequel la languette (66, 82, 88), vue en coupe perpendiculaire à la ligne de joint, est plus étroite que l'ouverture de la gouttière, et en ce que le second élément (30) présente une région, contiguë à la base de la languette, qui est plus épaisse en direction transversale que la languette, de manière à fermer au moins partiellement l'ouverture de la gouttière tandis que le champ magnétique est appliqué, afin de constituer une barrière contre la fuite de la matière de la bande d'étanchéité pendant l'union par fusion de cette bande à la gouttière et à la languette.

4. Procédé selon la revendication 3, dans lequel la seconde pièce moulée ferme entièrement l'ouverture de la gouttière, de manière à former un espace clos (86, 92) dans lequel la bande d'étanchéité (68) est placée, la surface en coupe transversale de cet espace clos étant sensiblement égale à la surface en coupe transversale de la bande d'étanchéité.

5. Procédé selon l'une quelconque des revendications 1 à 4, dans lequel les pièces moulées (28, 30; 46, 48); ont une forme telle que la languette (66, 76, 82, 88) soit placée au contact d'une paroi latérale extérieure de la gouttière (64, 78, 84, 90) lorsque les pièces moulées sont assemblées pour former ladite enceinte, et dans lequel les pièces moulées sont soumises à une force de compression qui a tendance à repousser la languette (66, 76, 82, 88) vers le fond de la gouttière (64, 78, 84, 90) au moment où la bande d'étanchéité (66, 80) est soumise à l'effet du champ magnétique à haute fréquence, ce qui fait que la languette a tendance à s'emboîter complètement dans la gouttière et que toute matière plastique en excès qui peut avoir tendance à suinter hors de la gouttière aura tendance à s'écouler dans ledit espace intérieur.

6. Procédé selon l'une quelconque des revendications 1 à 5, dans lequel les opérations consis tant à placer la bande d'étanchéité (68, 80) dans la gouttière (64, 78, 84, 90) et à assembler les pièces moulées (28, 30; 46, 48) sont effectuées en plaçant tout d'abord la première pièce moulée (28, 46) de telle manière que sa gouttière soit dirigée vers le haut, en insérant la bande d'étanchéité de haut en bas dans la gouttière et en engageant la languette (66, 76, 82, 88) de la seconde pièce moulée (30, 48) dans la gouttière (64, 78, 84, 90), et dans lequel la bande d'étanchéité (68, 80) est soumise à l'effet du champ magnétique à haute fréquence tandis que les pièces moulées sont placées dans ces positions respectives.

7. Procédé selon l'une quelconque des revendications 1 à 6, dans lequel ledit élément est un réservoir (22) pour un W.C. portable, et dans lequel lesdites première et seconde pièces moulées (28, 30) constituent respectivement les parties supérieure et inférieure de ce réservoir.

8. Procédé selon l'une quelconque des revendications 1 à 6, dans lequel ledit élément est un ensemble de cuvette (20) pour un W.C. portable, et dans lequel lesdites première et seconde pièces moulées (46, 48) constituent respectivement les parties supérieure et inférieure de cet ensemble de cuvette.

9. Procédé selon la revendication 8, dans lequel la première pièce moulée (46) définissant la partie supérieure de l'ensemble de cuvette (20) est constituée par une pièce moulée d'un seul tenant, formant une paroi extérieure de l'ensemble et une cuvette.

0 110 681

FIG. 1

FIG. 2

FIG. 3

FIG. 4

FIG. 5

82b

70

84a

82

84b

82a

84

86

72

FIG. 6

FIG. 7

88

92

90